# EUROPEAN PATENT SPECIFICATION

(11) **EP 1 500 559 B1**
(45) Date of publication and mention of the grant of the patent: **30.11.2005**
(21) Application number: 03102298.1
(22) Date of filing: 25.07.2003
(51) Int. Cl.: B60R 19/56

(54) **Lateral safety apparatus for articulated vehicles**
Seitlicher Sicherheitsapparat für lange Träger
Appareil de protection latérale pour des véhicules longs

(43) Date of publication of application: 26.01.2005
(73) Proprietor: Makersan Otomotiv Sanayi Ticaret Ltd. Sti, Kocaeli 41490 (TR)
(72) Inventor: Erkocak, Levent, 81510 Istanbul (TR)
(74) Representative: Sevinç, Erkan

(56) References cited:
- EP-A- 1 026 047
- FR-A- 2 807 984

## Description

### Technical Field of the Invention

The present invention relates to a lateral safety apparatus particularly used in articulated vehicles and which allows easier and secure opening and closing of a lateral sa fety frame on sides of these long vehicles.

### Background of the Invention / Prior Art

It has been found, especially in city traffic, that lorries, trailers or other articulated vehicles may present a major hazard to traffic safety on account of their length and height. Trucks and trailers must therefore be produced in consistence with strict regulations concerning lateral safety in order to prevent pedestrians, cyclists or small vehicles from accidentally slipping under the sides of long vehicles. These reg ulations may necessitate some mechanical and geometrical requisites, relevant to their positioning. In addition, lateral safety apparatus must also ensure, e.g. for repairs, accessibility to the lower parts of vehicles where components like fifth wheel, to ol case, electric feeding battery, fuel tank, lamps, reflectors or the like are located.

There are various applications present in the technical field of the present invention, each one having a primary goal to reduce various motorway risks to which especially cyclists, motorcyclists and pedestrians are subject to, as well as risks originating from faulty mechanic actions e.g. when stationary, entering repair zone under vehicle without taking necessary precautions for fixing the lateral safety devices.

Lateral safety apparatus of prior art usually have a flat external grid surface comprising horizontally positioned longitudinal safety bars connected by vertical elements, integrally coupled with suitable holder brackets fastened to the chassis of the vehicle. Those lateral safety bar holders usually provide an upper fixing base, which is integrally fastened to the lower side of the vehicle body. Safety bars which are generally located horizontally and which are connected on generally vertical bar holders o n the sides, constitute a safety frame. The safety frame is hinged to a bracket using a generally rotational and/or a transitional fixing means to allow for movement in between the open and closed positions. Safe locking of the safety frame to the bracket or a fixing base is usually provided by peg means, which are inserted within suitable holes on the bracket or the fixing base. The system can thereby, once closed, be operated in protection position during cruising and, once the safety frame is lifted to o pen position, be used in maintenance or repair position.

Lateral protection systems presently available on the market, however, usually necessitate a set of long and difficult operations in order for the driver or the repairer to reach the lower part of the vehicle and to secure the lateral safety apparatus in open position during the entire repair process. It is thereby necessary on every occasion that every single peg of all bar holders coupled with the longitudinal bars be first pulled out, and then the safety frame be lifted outwardly and at last, while said safety frame is kept lifted (in open position), all pegs of every single bar be inserted into suitable holes in the brackets on the sides. After the work or repair is done, the operations described above must be carried out in reverse order, this time to ensure tight interlocking of the safety frame with the bracket or a fixing base for safe operation during cruising.

Furthermore, it is commonly known that the fixing pegs and holes are subjected to serious damages after a certain rate of usage. Since entering in the fixing zone happens to become necessary a lot more than expected, it is evident that inserting and pulling out the pegs each time when necessary is both shortening lifetime of the system and renders it less reliable when operating.

A typical example in this field is disclosed in EP 1,026,047. Proposed invention relates to a bar holder of a safety frame of the above kind allowing temporarily upsetting the safety frame to enter in the lowe r part of the truck or trailer. The approach presented therein, however, involves some drawbacks concerning both practicality and safety. A major drawback of the device proposed in EP 1,026,047 lies in the fact that enormous human power is required to lock the lateral safety apparatus (LSA) in the lifted (open) position. Bearing in mind that lateral safety bars might sometimes be as large as three meters, those skilled in the art will easily appreciate how heavy those metal profiles might be and how difficult it would be to move them up especially when it is at the same time necessary to push them forward so as to slide pins into corresponding slots of the fixing base. Furthermore, in order to switch between any open and closed positions of the LSA, the user must first pull out the fixing pin inserted into the first closed position hole and than insert it in one of the open position holes while sliding the whole body of the lateral safety apparatus forward or backward towards the fixing base simultaneously ca rrying its weight in hands, which is obviously undesired due to its difficulty and necessity of enormous human power. According to the present invention, there is no need to exert any extra force, to push or pull the longitudinal members to fix or to remove them from a bracket since the system automatically engages to lock the safety frame in the desired position. It can also be easily adjusted to any of the open positions without having to remove or to insert a pin in a desired slot.

A very important drawback of the LSAs of the kind described above lies in the fact that the user has to remove all the pegs at first to enable rotation of the safety frame around the hinged bracket and then insert previously removed pegs into desired "open position" slots while simultaneously holding the longitudinal safety bars on the other hand. This makes the LSA quite uncomfortable to use and requires substantial human force to successfully operate as the LSA frame is generally too heavy to hold with one hand.

Yet another drawback of the prior art LSAs is the existence of elastic hooking means made of plastic material, which exhibits completely different operational features at -40 C and +40 C. Due to the nature of the material used therein and structure of the fixing means, it is almost impossible to lock or unlock the safety frame at -40 C outside temperature while the same fixing means presents lower tightness and thus safety at high temperatures like +40 C or over.

### Objects of the Invention

One of the objects of the invention is to provide an easy-to-use lateral safety apparatus (LSA) which locks into desired position without need of removing and/or inserting removable pegs, the lateral safety apparatus comprising a single rotational joint free of a sliding recess whereby the user is eliminated to exert huge forces to push or pull the longitudinal bars for securing them into desired position.

Another object of the present invention is to provide an easy -to-use lateral safety apparatus which comprises spring balls for maintaining tight and reliable connection in open or closed positions and a safety latch, whereby the lateral protection bars are rotated and automatically fixed into position upon which a safety latch secures the bars in position.

Yet another object of th e present invention is to provide an easy -to-use lateral safety apparatus which comprises spring balls with adjustable compression means that operates safely irrespective of outside temperature.

### Summary of the Invention

The objects of the invention are achieved through use of a main bracket comprising a plurality of slots in its inner lateral walls in which a spring ball and pins, which are capable of interacting with the corresponding slots of said lateral walls of said fixing zone, are accommodated. The pins mounted in the corresponding slots of the fixing zone provides the coupling of the fixing zone or the main bracket with profiles in such a way to provide the profile with the ability to rotate around the axis of a central pin until the spring ball can slide in between a plurality of open position and closed position holes. In addition, there are located pins to be inserted into suitable slots so as to prevent any outward movement of the profile in the closed position, that is when cruising.

### Brief Description of the Figures

In the following the invention is described in more detail with reference to the drawings, which are given solely for the purpose of exemplifying the invention, in which:

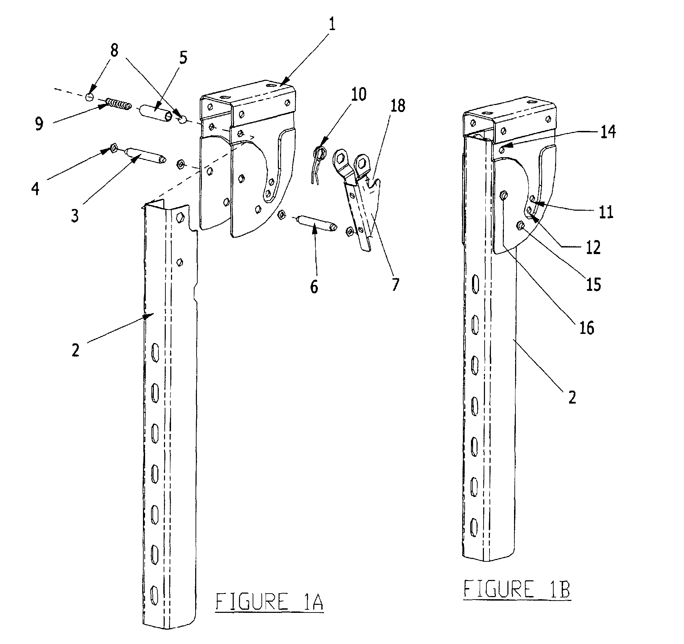

Fig. 1.A is a dismantled perspective view of essential parts of the main bracket (1) and the bar holder (2) according to the invention;
Fig. 1.B is an assembled perspective view of the main bracket (1) and the bar holder (2) in closed position;
Fig. 2.A is an assembled side view of the main bracket (1) and the b ar holder (2) in closed position;

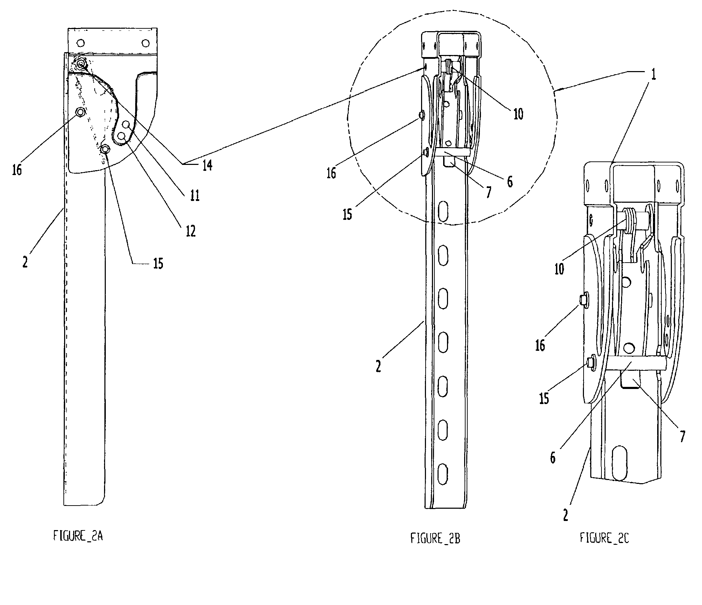

Fig. 2.B is an assembled perspective view of the main bracket (1) and the bar holder (2) in closed position, showing the back view of the safety latch (7),
Fig. 2.C is an expanded view of the marked circular area of Fig. 2.B.

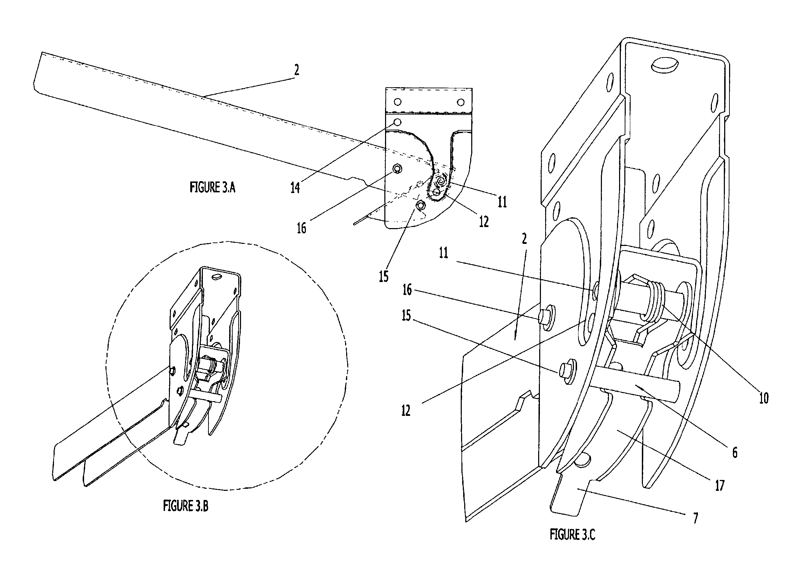

Fig. 3.A is an assembled side view of the main bracket (1) and the bar holder (2) in half - open position;
Fig. 3.B is an assembled perspective view of the main bracket (1) and the bar holder (2) in half-open position;
Fig. 3.C is an expanded view of the marked circular area of Fig. 3.B.

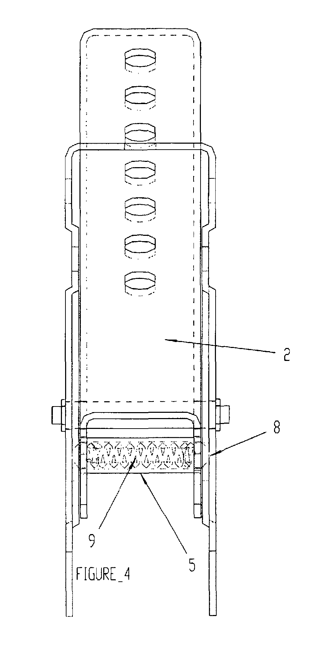

Fig. 4. is a top view of the bar holder (2) locked in a lifted position.

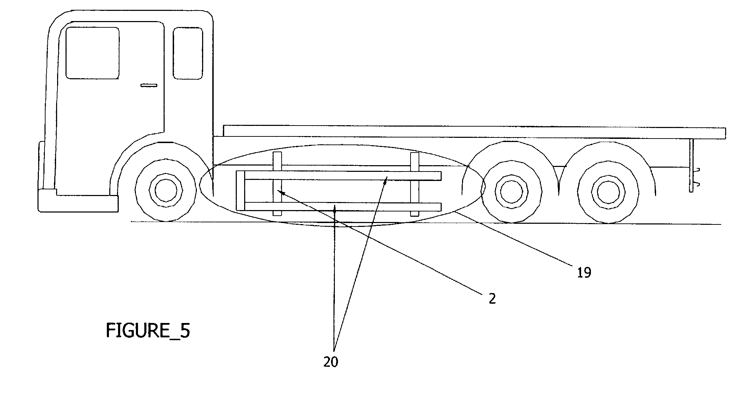

Fig. 5. is a schematic side view of the long vehicle equipped with a lateral protection device.

### Detailed Description of the Invention

Now referring to the figures outlined above, the lateral safety apparatus according to the invention comprises a main bracket (1), which is fixed to a lower surface on the sides of the vehicle chassis. The bar holder (2) is then fixed from its upper end to the m ain bracket through use of a center pin (3) -and washers (4)-, which is inserted into the holes (Center pin hole, 16) drilled on the sides of said main bracket (1) and which allows restricted rotational movement of the bar holder (2) around its central axis. In closed position, the bar holder (2) profile is restricted from rotating inwards (towards right in Fig. 2.A) through use of a stationary pin (6, inserted into stationary pin hole 15), while on the contrary, the same is allowed to rotate outwards (towa rds left in Fig. 2.A) around the axis of said center pin (3).

The main bracket (1) comprises a closed position hole (14) drilled on the two sides of the bracket (1), through which a ball -spring mechanism is inserted. The ball -spring mechanism comprises a generally helical spring (9) inserted into a spring cover tube (5) whose internal diameter is slightly greater than the outer diameter of said spring (9). A metal ball (8) is then plugged in at both sides of the cover tube (5) while the spring (9) is compressed in the central part of said cover tube (5). When the balls (8) on the sides of the spring (9) are fully inserted into the cover tube (5), the ball -spring mechanism will be ready for use as a semi -mobile fixing means to lock the bar holder (2) on pair of a desired holes drilled on the main bracket (1). The potential energy loaded on the central spring (9) will push both balls (8) outwards and provide means for fixing the bar holder (2) against a pair of holes. Once the ball -spring mechanism leans again st a pair of mutual holes on the main bracket (1), the balls (8) protrude outwards and fill in the holes as far as the diameter of the holes permit. The ball -spring mechanism will then fix in this position while the balls (8) on the sides of the tube (5) partially protrude and fill in corresponding holes and provide the benefit of a "lateral compression strength". The ball-spring mechanism will remain fixed in this position and bear forces including those applied in a direction perpendicular to the spring compression axis. Ball-spring mechanism may only change its position when the pressure applied perpendicular to spring compression axis exceeds the "lateral compression strength" of the ball -spring mechanism. In the present case, the spring compression amou nt is arranged to suit the needs for securing tightly a lateral protection device, i.e. large enough to carry the weight of the safety frame in any of its open positions and small enough to enable a user to easily slide the safety frame to a closed or an o pen position. It is apparent that the balls (8) are mutually pushed towards the center of the spring cover tube (5) when a force as such is applied to change the position of the safety frame (19). As the balls (8) are totally buried in the cover (5) and lean against the flat internal surface of the main bracket (1), changing from one position to another requires minor human force and is therefore very comfortable and easy for the user to implement.

Although it is possible to drill a large number of "open position" holes on the spring balls' runway, tracing the circular path starting from the closed position hole (14) and ending at the last open position hole (12), only two open position holes (11, 12) were shown on enclosed drawings.

Since the ball-spring mechanism tightly locks the safety frame in the desired position (11,12 or 14 in the drawings), the safety frame is avoided to vibrate during cruise of the vehicle, thus eliminating a noise source which was a major problem in prior art LSAs and providing a more comfortable cruise. The bar holder (2) has a plurality of slots adapted to accommodate a number of longitudinal safety bars (20), which may be fixed into these slots using any desired fixing means.

In maintenance position, the ball spring fixing me chanism is adapted to safely carry the weight of the safety frame (19) irrespective of the frame's angle with respect to the ground. According to the invention, secure locking of the safety frame in a lifted (open) position is not only achieved through use of the ball-spring mechanism, but guaranteed by a safety latch (7) which automatically engages when the safety frame (19) is lifted to any desired angle with respect to the ground.

The purpose of a security latch (7) is to prevent unexpected closure of the safety frame once a force superior to that needed to release the ball spring fixing system is accidentally exerted onto the frame. To solve this problem, the main bracket (1) is provided with a safety latch (7) mounted on the spring cover tube (5) at i ts first end, bearing a restriction pin (6) at its second end. The safety latch (7) comprises a smooth curved surface (17) (see Fig. 1.A) adapted to slide over the restriction pin (6) and a lock cavity (18) located right at the end of said smooth curved su rface (17). A spring (10) is used to slide said second end of the safety latch (7) over the restriction pin (6) while rotating around the spring compression axis. When the bar holder (2) is rotated more than the outer length of smooth sliding surface (17), the spring (10) helps the restriction pin (6) to automatically engage the locking cavity (18) of the safety latch (7). Once the pin (6) engages the locking cavity (18), the safety latch (7) will remain in this position until the user releases the latch (7) by way of the tip of the second end of the latch (6). In case that the user further lifts the safety frame, the latch (7) will keep its locked position and provide a fixed location over which the frame (19) is blocked to return. The safety latch (7) is provided as a measure to avoid accidental injuries of the user in the event that the ball -spring mechanism unexpectedly releases safety frame (19) and hits the user under the vehicle.

It should also be mentioned that, in order to close the safety frame, the user shall at first need to push the safety latch (7) and then exert a force to pull the safety frame (19), greater than that needed to release the spring -ball fixing mechanism. In sum, the safety latch (7) is a means to further secure the stationary po sitioning of the profile (2) in one of the open positions, which is already fixed by the spring -ball fixing mechanism.

It is also possible to adjust the amount of force needed to release the safety frame (19) simply by changing the type of the spring (9) or adjusting its compression stroke in the cover tube (5). Tight connection between the main bracket (1) and the safety frame (19) eliminates vibrations during vehicle cruise and guarantees noiseless operation.

## Claims

1. A lateral safety apparatus suitable for use with long vehicles to prevent humans and vehicles to accidentally slip to the underside of the vehicles, comprising a main bracket (1) and a bar holder (2) connected to said main bracket (1) by a rotating pin (3) and suitable for fixing a plurality of safety bars (20) to constitute a safety frame (19), **characterized in that** the main bracket (1) comprises;
a spring-ball mechanism carried by said bar holder (2) when it rotates and having a spring (9) inserted into a spring cover tube (5) and a metal ball (8) plugged in at each end of said cover tube (5) while said spring (9) is compressed in the central part of said cover tube (5),
a plurality of holes drilled on mutually facing sides of said bracket (1), in which the balls of said ball-spring mechanism partially fit to lock said bar holder (2) in the corresponding position, whereby the bar holder (2) can be easily positioned between said plurality of holes of the bracket (1), and
a safety latch (7) located onto said ball-spring mechanism, the safety latch (7) comprising at its one end a smooth curved surface (17) adapted to slide over a restriction pin (6) and a lock cavity (18) located right at the end of said smooth curved surface (17), and a spring (10) located around said cover tube (5), whereby said spring (10) automatically helps said smooth curved surface (17) of the safety latch (7) slide over said restriction pin (6) while the safety frame (19) rotates and to engage in the lock cavity (18) to provide a fixed location over which the frame (19) is blocked to return.

2. A lateral safety apparatus as set forth in claim 1 wherein the main bracket (1) has a flat internal surface across the circular pathway of the balls (8) whereby the ball-spring mechanism can be readily re-positioned.

3. A lateral safety apparatus as set forth in claim 2 wherein the spring (9) of the ball-spring mechanism is a helical spring.

4. A lateral safety apparatus as set forth in any of the preceding claims wherein the bar holder (2) has a plurality of slots adapted to accommodate longitudinal safety bars (20).

5. A lateral safety apparatus as set forth in any of the preceding claims wherein the spring (9) of the ball-spring mechanism is a metal spring, whereby the ball-spring mechanism can operate irrespective of minor outside temperature changes in the range of +/- 40°C.

## Patentansprüche

1. Seitliche Sicherheitseinrichtung für den Einsatz an langen Fahrzeugen, um zu vermeiden, dass Menschen oder Fahrzeuge bei einem Unfall unter die Unterseite der Fahrzeuge rutschen, umfassend eine Hauptklammer (1) und einen Stangenhalter (2), der mit der Hauptklammer (1) über einen Drehzapfen (3) verbunden ist und zum Fixieren einer Mehrzahl von Sicherheitsstangen (20) ausgebildet ist, um einen Sicherheitsrahmen (19) auszubilden,
**dadurch gekennzeichnet, dass** die Hauptklammer (1) umfasst;
einen Feder-Kugel-Mechanismus, der von dem Stangenhalter (2) gehalten ist, wenn dieser rotiert, und der eine in ein Federabdeckrohr (5) eingesetzte Feder (9) und einen in beide Seiten des Abdeckrohrs (5) eingesteckten Metallball (8) aufweist, während die Feder (9) in dem Mittelabschnitt des Abdeckrohrs (5) komprimiert ist,
eine Mehrzahl von in einander gegenüberliegenden Seiten der Klammer (1) eingebrachten Löchern, in die die Kugeln des Kugel-Feder-Mechanismus teilweise eingreifen, um den Stangenhalter (2) in der entsprechenden Position zu verriegeln, wobei der Stangenhalter (2) auf einfache Weise zwischen der Mehrzahl von Löchern der Klammer (1) positioniert werden kann und
einen Sicherheitsverschluss (7) der an dem Kugel-Feder-Mechanismus angeordnet ist, wobei der Sicherheitsverschluss (7) an seinem einen Ende eine sanft gekrümmte Fläche (17) aufweist, die dazu ausgelegt ist, über einen Begrenzungszapfen (6) hinweg zu gleiten, und eine Verriegelungsausnehmung (18) aufweist, die gerade am Ende der sanft gekrümmten Fläche (17) positioniert ist, und eine Feder (10), die um das Abdeckrohr (5) herum angeordnet ist, wobei die Feder (10) selbsttätig die sanft gekrümmte Fläche (17) des Sicherheitsverschlusses (7) dabei unterstützt, über den Begrenzungszapfen (6) zu gleiten, während der Sicherheitsrahmen (19) rotiert, und in die Verriegelungsausnehmung (18) einzugreifen, um eine feste Position vorzusehen, über der der Rahmen (19) gegen eine Rückkehrbewegung blockiert ist.

2. Seitliche Sicherheitsvorrichtung nach Anspruch 1, wobei die Hauptklammer (1) eine flache Innenoberfläche über den kreisförmigen Weg der Kugel (9) aufweist, wodurch der Kugel-Feder-Mechanismus einfach repositionierbar ist.

3. Seitliche Sicherheitsvorrichtung nach Anspruch 2, wobei die Feder (9) des Kugel-Feder-Mechanismus eine Schraubenfeder ist.

4. Seitliche Sicherheitsvorrichtung nach einem der vorangehenden Ansprüche, wobei der Stangenhalter (2) eine Mehrzahl von Schlitzen aufweist, die dazu vorgesehen sind, um längliche Sicherheitsstangen (20) aufzunehmen.

5. Seitliche Sicherheitsvorrichtung nach einem der vorangehenden Ansprüche, wobei die Feder (9) des Kugel-Feder-Mechanismus eine Metallfeder ist, wobei der Kugel-Feder-Mechanismus unabhängig von geringfügigen Außentemperaturänderungen im Bereich von +/- 40°C funktioniert.

## Revendications

1. Dispositif de sécurité latérale adapté pour être utilisé avec des véhicules longs pour empêcher des humains et des véhicules de glisser accidentellement sous les véhicules, comprenant un support principal (1) et un support (2) de barres connecté audit support principal (1) au moyen d'un axe rotatif (3) et adapté pour la fixation d'une pluralité de barres de sécurité (20) afin de constituer un cadre protecteur (19), **caractérisé en ce que** le support principal (1) comprend :
un mécanisme à ressort et à billes porté par ledit support (2) de barres lorsqu'il tourne et comportant un ressort (9) inséré dans un tube protecteur (5) de ressort et une bille métallique (8) insérée à chaque extrémité dudit tube protecteur (5) tandis que ledit ressort (9) est comprimé dans la partie centrale dudit tube protecteur (5),
une pluralité de trous percés sur des côtés mutuellement en vis-à-vis dudit support (1), dans lesquels les billes dudit mécanisme à ressort et à billes s'ajustent partiellement pour bloquer ledit support (2) de barres dans la position correspondante, grâce à quoi le support (2) de barres peut être aisément positionné entre ladite pluralité de trous du support (1), et
un loquet de sûreté (7) situé sur ledit mécanisme à billes et à ressort, le loquet de sûreté (7) comprenant en sa première extrémité une surface incurvée lisse (17) adaptée pour glisser sur un axe de retenue (6) et une cavité de blocage (18) située juste à l'extrémité de ladite surface incurvée lisse (17), et un ressort (10) placé autour dudit tube protecteur (5), grâce à quoi ledit ressort (10) aide automatiquement ladite surface incurvée lisse (17) du loquet de sûreté (7) à glisser sur ledit axe de retenue (6) tandis que le cadre protecteur (19) tourne et à se mettre en prise dans la cavité de blocage (18) pour fournir un endroit fixe sur lequel le cadre (19) est bloqué pour revenir.

2. Dispositif de sécurité latérale selon la revendication 1, dans lequel le support principal (1) a une face intérieure plate en travers du parcours circulaire des billes (8), grâce à quoi le mécanisme à billes et à ressort peut être aisément repositionné.

3. Dispositif de sécurité latérale selon la revendication 2, dans lequel le ressort (9) du mécanisme à billes et à ressort est un ressort hélicoïdal.

4. Dispositif de sécurité latérale selon l'une quelconque des revendications précédentes, dans lequel le support (2) de barres comporte une pluralité de fentes conçues pour recevoir des barres de sécurité longitudinales (20).

5. Dispositif de sécurité latérale selon l'une quelconque des revendications précédentes, dans lequel le ressort (9) du mécanisme à billes et à ressort est un ressort métallique, grâce à quoi le mécanisme à billes et à ressort peut fonctionner quelles que soient les faibles variations de la température extérieure dans la plage de ± 40 °C.
